# EUROPÄISCHE PATENTSCHRIFT

(11) **EP 3 859 512 B1**
(45) Veröffentlichungstag und Bekanntmachung des Hinweises auf die Patenterteilung: **14.06.2023**
(21) Anmeldenummer: 20154254.5
(22) Anmeldetag: 29.01.2020
(51) Int. Cl.: G06F 3/12

(54) **VERBESSERTE ABARBEITUNG VON DRUCKAUFTRÄGEN DURCH KOMPATIBLES MATERIAL**
IMPROVED PROCESSING OF PRINT JOBS BY MEANS OF COMPATIBLE MATERIAL
TRAITEMENT AMÉLIORÉ DES ORDRES D'IMPRESSION À L'AIDE D'UNE MATIÈRE COMPATIBLE

(43) Veröffentlichungstag der Anmeldung: 04.08.2021
(73) Patentinhaber: Heidelberger Druckmaschinen AG, 69115 Heidelberg (DE)
(72) Erfinder: Wagensommer, Bernhard, 69254 Malsch (DE); Wolf, Rainer, 70619 Stuttgart (DE); Kropp, Frank, 69256 Mauer (DE); Grasl, Gottfried, 74918 Angelbachtal (DE); Stahl, Dominic, 69256 Mauer (DE); Rößler, Georg, 74918 Angelbachtal (DE); Grimm, Jürgen, 60431 Frankfurt (DE)

(56) Entgegenhaltungen:
- EP-A2- 2 026 192
- DE-A1-102004 033 056
- JP-A- 2007 320 134
- US-A1- 2008 065 455

## Beschreibung

Die vorliegende Erfindung betrifft ein Verfahren zur Erzeugung von Druckerzeugnissen mit wenigstens einem Rechner, wenigstens einer Eingabevorrichtung zur Steuerung wenigstens einer Bedruckstoffe verarbeitenden Maschine, wobei der wenigstens einen Eingabevorrichtung die technischen und wirtschaftlichen Daten wenigstens einer Druckerei zugeführt werden und wobei dem wenigstens einen Rechner mittels der wenigstens einen Eingabevorrichtung Präferenzen von Kunden bezüglich Druckaufträgen zugeführt werden.

Aus dem Stand der Technik sind Verfahren bekannt, mit denen sich die Herstellungsprozesse von Druckprodukten optimieren lassen. Ein solches Verfahren geht aus der Offenlegungsschrift DE 10 2007 032 944 B4 hervor, welches eine Festlegung von Parametern einer Druckmaschine für standardisierten Druck erlaubt. Eine Bedienperson kann mit Hilfe eines Rechners Druckfarben, Sonderfarben und Bedruckstoffsubstrate aus einer Datenbank wählen und daraus ein Profil erstellen. Weiterhin kann die Bedienperson Messbedingungen für eine Qualitätskontrolle des Bedruckstoffs angeben oder Toleranzbereiche auswählen, in denen das Druckerzeugnis liegen soll. Danach berechnet der Computer anhand der eingegebenen Daten und den Daten aus der Datenbank eine Empfehlung für die Einstellung der Parameter der Druckmaschine. Die Parameter können dann von der Bedienperson eingestellt werden, anschließend erfolgt die Abarbeitung des Druckauftrags auf der Druckmaschine.

Aus der Patentanmeldung US 2007/0095494 A1 geht ein Verfahren zur Erleichterung der Optimierung des Herstellungsprozesses von Papier für Druckprozesse bezüglich geforderter Qualität oder Betriebsparameter hervor. Bei dem Herstellungsverfahren werden bahnähnliche Produkte auf Faserbasis erzeugt, wobei zur Optimierung des Betriebes Qualitätsfaktoren für das hergestellte Produkt festgelegt werden, Steuergrößen, die den Prozess oder die Qualitätsfaktoren beeinflussen, festgelegt werden und die Wirkung einer jeden Steuergröße auf die Qualitätsfaktoren dargestellt wird. Über eine Benutzerschnittstelle werden die variierenden Werte für die Steuergrößen oder die Werte der Qualitätsfaktoren gleichzeitig dargestellt, so dass die Werte der Steuergrößen und die Werte der Qualitätsfaktoren durch den Bediener des Herstellungsprozesses gleichzeitig betrachtet werden können.

Aus der Offenlegungsschrift DE 100 03 797 A1 geht ein Verfahren zur Auswahl von Bedruckstoffen und Druckfarben für den Druck in Farbdruckmaschinen hervor. Vor dem Andruck auf einer Farbdruckmaschine werden in einem Rechner die Arten des Bedruckstoffs und dessen Druckeigenschaften gespeichert und auf einem mit dem Rechner verbundenen Monitor dargestellt. Weiterhin wird das zu druckende Bild und verschiedene Druckverfahren und Druckfarben und deren Eigenschaften digital eingegeben und auf dem Monitor dargestellt. Mittels einer mit dem Rechner und dem Monitor verbundenen Eingabetastatur wird die Bedruckstoffart und das Druckverfahren zur Darstellung eines simulierten Andrucks auf dem Monitor ausgewählt. Auf diese Art und Weise lässt sich die Auswirkung eines gewählten Druckverfahrens auf einem Bildschirm durch den Bediener einer Druckmaschine beobachten.

Aus der Patentanmeldung EP 2 026 192 A2 gehen ein Verfahren und eine Vorrichtung zur Verbesserung der Nutzung von in einer Druckerei vorhandenen Maschinen hervor. Dazu werden ein Workflow-Management-System und eine Vielzahl von Ressourcen in der Druckerei verwendet. Das Workflow-Management-System ist so eingerichtet, dass es Druckjobs von Kunden empfangen kann und auf Basis der empfangenen Druckjobs entsprechende Kosten berechnen kann. Die Kostenberechnung findet statt, indem eine Simulation auf Basis der mit den empfangenen Druckjobs verbundenen wirtschaftlichen Daten erstellt wird. Das Workflow-Management-System kann dabei auch bestimmen, wie sich die Kosten per Druck verändern, wenn Druckaufträge in der Reihenfolge oder in ihrer Art verändert werden. Es wird dabei davon ausgegangen, dass der Maschinenpark in der Druckerei in der Lage ist, die Druckjobs auch abzuarbeiten. Genau dies ist jedoch in der Realität nicht zutreffend. Jede Druckerei hat nur einen begrenzten Maschinenpark und kann daher auch nur diejenigen Druckaufträge abarbeiten, die mit dem Maschinenpark technisch beherrschbar sind. Da aber Druckaufträge inzwischen unheimlich komplex sind und die unterschiedlichsten Druckverfahren, Lackierverfahren und Weiterverarbeitungsverfahren umfassen, ist die Wahrscheinlichkeit sehr groß, dass an das Workflow-Management-System einer Druckerei übergebene Druckaufträge gar nicht technisch in der Druckerei abgearbeitet werden können. Die Druckerei muss dann den Kunden darüber informieren, dass die bei der Druckerei abgegebenen Druckaufträge gar nicht abgearbeitet werden können. Solche Zustände sollen selbstverständlich nach Möglichkeit vermieden werden, im Stand der Technik ist dazu jedoch keine Lösung offenbart.

Der zuvor aufgeführte Stand der Technik hat den Nachteil, dass zum einen eine Ausgabe eines erzielbaren Qualitätswerts für das zukünftige Druckerzeugnis in Abhängigkeit der Farbenqualität und des Druckverfahrens nicht vorgesehen ist. Auch ist im Stand der Technik nicht vorgesehen, dass Parameter einer Druckmaschine für standardisierte Drucke unter Zuhilfenahme von Toleranzbereichen in Abhängigkeit verfügbarer Materialien oder Druckprozesse hinterlegt sind.

Ausgehend vom Stand der Technik ist es Aufgabe der vorliegenden Erfindung, ein Verfahren bereitzustellen, welches in Abhängigkeit von der Papierqualität, der Farbenqualität, des Druckverfahrens und der Maschinenkonfiguration bzw. des Herstellungsprozesses, eine Simulation der erreichbaren Druckqualität ermöglicht, wobei am Ende des Prozesses die vom Kunden an eine Druckerei übersendeten Druckaufträge in der gewünschten Druckqualität hergestellt werden können.

Diese Aufgabe wird erfindungsgemäß durch Patentanspruch 1 gelöst. Vorteilhafte Ausgestaltungen der vorliegenden Erfindung ergeben sich aus den abhängigen Patentansprüchen, der Beschreibung und der Figuren.

Erfindungsgemäß ist vorgesehen, dass wenigstens ein Rechner auf Basis der technischen und wirtschaftlichen Daten von wenigstens einer Druckerei in einer Simulation mögliche Druckaufträge berechnet, welche in der wenigstens einen Druckerei produzierbar sind. Dabei können entweder alle möglichen Druckaufträge berechnet werden, oder es gibt von vornherein bestimmte Vorgaben der Kunden über Kundenpräferenzen, welche die Aufträge einschränken, so dass nur die passenden Aufträge berechnet werden, denn es macht keinen Sinn Aufträge zu berechnen, welche von Kunden nicht nachgefragt werden, aber in einer Druckerei technisch abgearbeitet werden könnten. Auf diese Art und Weise werden zunächst die Druckprodukte berechnet, welche in einer Druckerei unter Berücksichtigung des dort vorhandenen Maschinenparks, der dort verwendeten Verbrauchsmaterialien und der wirtschaftlichen Kalkulation möglich sind. Dann erstellt der Rechner unter Berücksichtigung der Ergebnisse der Simulation und von eingegebenen Präferenzen von Kunden die dazu passenden Angebote für Druckaufträge. Bei diesem Schritt werden die technischen und wirtschaftlichen Möglichkeiten einer Druckerei mit den Kundenpräferenzen in Übereinstimmung gebracht, wobei wie bereits ausgeführt wurde Kundenpräferenzen auch bei der Berechnung der möglichen Aufträge bereits genutzt werden können. Diese Präferenzen von Kunden können von den Kunden selbst eingegeben werden, es kann sich aber auch um ein selbstlernendes System handeln, welches kontinuierlich Druckaufträge von Kunden analysiert und die Präferenzen der Kunden z.B. bezüglich eingesetzter Farben, Drucksubstraten etc. erfasst. Der Rechner vergleicht dann die erstellten Angebote mit tatsächlichen Druckaufträgen von Kunden und arbeitet bei einer Übereinstimmung zwischen Angebot und Druckauftrag des Kunden den Druckauftrag ab, indem dieser an eine Druckmaschine der Druckerei gesendet und dort abgearbeitet wird.

Mit dem erfindungsgemäßen Verfahren ist es somit möglich, auf Basis der Möglichkeiten einer Druckerei und unter Berücksichtigung der Präferenzen von Kunden deren Aufträge passgenau abzuarbeiten. Es ist somit ein vollautomatisches Zusammenbringen von Herstellungsressourcen und Kundenwünschen möglich. Insbesondere kann die Eingabe der Kundenpräferenzen über Rechner erfolgen, welche mit dem Internet verbunden sind, ebenso kann die Eingabe der technischen und wirtschaftlichen Daten der Druckerei über einen Rechner erfolgen, welcher mit dem Internet verbunden ist. Beide mit dem Internet verbundenen Rechner werden dann wiederum über das Internet mit einem Rechner einer Plattform verbunden, welche die Kundenpräferenzen und technischen und wirtschaftlichen Daten der jeweiligen Druckerei zusammenbringt. Dort findet dann die Berechnung der Übereinstimmung statt und die anschließende Weiterleitung der passenden Druckaufträge zur Druckerei.

In einer ersten Ausgestaltung der Erfindung ist vorgesehen, dass der Kunde mittels einer Eingabevorrichtung Toleranzgrenzen vorgibt, welche auf die Kundenpräferenzen und die formulierten Ergebnisse des Rechners angewendet werden und bei der Erstellung der Angebote durch den Rechner berücksichtigt werden. Da es eine fast unbegrenzte Vielzahl von Bedruckstoffen insbesondere hinsichtlich Grammatur und Beschichtung gibt, das Gleiche gilt auch für Druckfarben, ist es schwierig, Druckaufträge und Ressourcen einer Druckerei exakt hundertprozentig passend zueinander zu bringen. Mit der vorliegenden Ausgestaltung der Erfindung ist es nun möglich, dass der Kunde entsprechende Toleranzgrenzen, z.B. bei der Grammatur des Bedruckstoffs, der Beschichtung oder der Druckfarben eingibt, so dass hier von vornherein bestimmte Abweichungen, z.B. in einem Prozentbereich von maximal 5 %, zulässig sind. Auf diese Art und Weise wird die Chance auf Übereinstimmung zwischen von Kunden gewünschten Druckaufträgen und den Fertigungsressourcen einer Druckerei erhöht. Auf diese Art und Weise kann der Kreis der infrage kommenden Druckereien erweitert werden, was üblicherweise zu niedrigeren Auftragskosten führt und so den Kunden günstigere Druckaufträge ermöglicht.

In einer weiteren Ausgestaltung der vorliegenden Erfindung ist vorgesehen, dass als technische oder wirtschaftliche Daten der Druckerei Eigenschaften wie Bedruckstoff, Farbe, in einer Druckerei verarbeitbare Prozesse und Kosten, eingegeben werden. Mit diesen technischen und wirtschaftlichen Daten ist es möglich, die Leistungsfähigkeit einer Druckerei hinreichend abzubilden, um die dazu passenden Druckaufträge zuordnen zu können. Für eine erfolgreiche Zusammenführung von Druckaufträgen und Angeboten einer Druckerei ist es wichtig, sowohl technische als auch wirtschaftliche Daten zu berücksichtigen, denn es reicht nicht aus, dass eine Druckerei einen Druckauftrag technisch abarbeiten kann, wenn er für diese Druckerei wirtschaftlich einen hohen Verlust bedeutet. Deshalb müssen auch wirtschaftliche Daten der Druckerei hinterlegt werden, so dass für die Druckerei wirtschaftlich nicht sinnvolle Druckaufträge aussortiert werden können. Hohe Preise für den Kunden können dann vermieden werden, wenn der Kunde seine Anforderungen in den Kundenpräferenzen absenkt, so dass auch die Kosten bei der Druckerei sinken und diese auch zu reduzierten Preisen auskömmlich produzieren kann.

In einer weiteren Ausgestaltung der vorliegenden Erfindung ist vorgesehen, dass durch die Druckerei Produktbeschreibungen für bestimmte Druckprodukte eingegeben werden, welche Eigenschaften wie Bedruckstoffformat, Farbigkeit, Produkteigenschaften und den zu druckenden Bildinhalt umfassen. In diesem Fall kann die Druckerei bestimmte Druckprodukte mit einer genauen Beschreibung vorgeben, welche sie z.B. bevorzugt abarbeitet. Auf diese Art und Weise kann die Druckerei gezielt nur bestimmte Produkte anbieten, die ihr einen ausreichend hohen Gewinn bescheren.

Vorteilhafterweise ist weiterhin vorgesehen, dass die vom Kunden eingebbaren Kundenpräferenzen die gewünschte Druckqualität umfassen. Durch die Vorgabe der Druckqualität, kann sich die Auswahlmöglichkeit des Kunden erheblich vergrößern, denn je höher die gewünschte Druckqualität ist, desto weniger Druckereien werden in der Lage sein, diese gewünschte Druckqualität bei einem bestimmten Druckprodukt zu liefern. Weiterhin steigen bei einer hohen Druckqualität die Druckkosten entsprechend. Somit kann auch jeder Kunde über die Vorgabe der gewünschten Druckqualität selbst den Rahmen der infrage kommenden Druckereien eingrenzen oder erweitern.

In einer Weiterbildung der vorliegenden Erfindung ist vorgesehen, dass die gewünschte Druckqualität durch wenigstens eine der Vorgaben, wie visueller Vergleich, Medientyp, Druckmusterkatalog, Druckstandard, Qualitätsskala oder Kundenbewertungen definiert wird. Eine gewünschte Druckqualität kann durch unterschiedliche Kriterien festgelegt werden. Eine einfache Möglichkeit ist ein visueller Vergleich, d.h. der Kunde und der Drucker beurteilen rein optisch, ob die gewünschte Druckqualität erreicht wird. Da das menschliche Auge nicht jede Abweichung feststellt, kann hier die Druckqualität größeren Schwankungen unterworfen sein. Es kann auch ein Medientyp festgelegt werden, wie z.B. Hochglanzbroschüre, welcher in der Branche mit üblichen Qualitätsanforderungen verbunden ist. Ebenso kann ein Druckmusterkatalog ausgewählt werden, oder es kann ein bestimmter Druckstandard, z.B. nach ISO-Norm, verwendet werden. Weiterhin ist auch eine Orientierung an einer Qualitätsskala oder Kundenbewertungen möglich. Selbstverständlich können auch mehrere Qualitätskriterien miteinander kombiniert werden. Bei der Qualitätsskala können z.B. mehrere Qualitätsstufen, insbesondere 1 bis 5, vorgesehen sein. Die Qualitätsstufe 1 bedeutet dabei eine niedrige Qualität, während die Qualitätsstufe 5 eine hohe Qualität bedeutet. Entsprechend vergrößert oder verringert sich die Auswahl der infrage kommenden Druckereien und ändert sich entsprechend das Preisgefüge des Auftrags. Auch die Kundenbewertung kann durch eine mehrstufige Skala dargestellt werden, welche die Zufriedenheit von Kunden, z.B. ebenfalls in fünf Stufen, abbildet. Hier können z.B. insbesondere Sterne vergeben werden, wobei eine niedrige Zufriedenheit mit einem Stern und eine hohe Zufriedenheit mit fünf Sternen bewertet wird. Diese Kundenbewertungen werden heutzutage bei im Internet erbrachten Dienstleistungen wie im Versandhandel häufig genutzt, indem jeder Käufer ein zuvor gekauftes Produkt bzw. die Leistung des Versenders bewertet. Eine entsprechende Bewertung der Zufriedenheit kann auch für die Druckqualität eines Druckprodukts vorgenommen werden. So kann der Kunde in seinen Kundenpräferenzen z.B. eingeben, dass nur Druckereien ausgewählt werden, die mindestens eine 4 Sterne Kundenbewertung erhalten haben, weil der Kunde dies als ausreichendes Qualitätssigel ansieht.

In einer weiteren Ausgestaltung der vorliegenden Erfindung ist vorgesehen, dass die Präferenzen der Kundeneigenschaften der Druckerei die Terminqualität, Kostenqualität und Bindequalität eines Druckprodukts umfassen. Durch Vorgabe dieser Kundenpräferenzen wird ebenfalls von vornherein eine bestimmte Qualität des Druckauftrags festgelegt, so dass nur Druckereien für die Abarbeitung des Druckauftrags ausgewählt werden können, welche dieser Anforderung genügen. Auch hier kann der Kunde unterschiedliche Schwerpunkte setzen, indem er für Termintreue, Kosten und Bindequalität eines Druckprodukts unterschiedliche Anforderungen eingeben kann.

Vorteilhafterweise ist vorgesehen, dass die Eingabeeinrichtungen mit dem wenigstens einen Rechner und der wenigstens einen Bedruckstoffe verarbeitenden Maschine über vorgegebene standardisierte Softwareschnittstellen verbunden sind. Die Rechner beim Kunden, in der Druckerei und gegebenenfalls der Internetplattform, verfügen dabei über standardisierte Softwareschnittstellen, so dass die von der Druckerei und den Kunden zur Verfügung gestellten Daten immer gleich und nachvollziehbar ausgewertet werden können und die Abarbeitung des Druckauftrags durch die Bedruckstoffe verarbeitende Maschine korrekt sichergestellt wird. Insbesondere stellt die standardisierte Softwareschnittstelle sicher, dass die Daten alle im korrekten Format übertragen werden bzw. in die nötigen Formate der beteiligten Rechner bzw. Bedruckstoffe verarbeitende Maschine, umgewandelt werden, wenn die Datenformate voneinander abweichen. Dies ist insbesondere aufgrund der hohen Anzahl von unterschiedlichen Kunden und unterschiedlichen Druckereien erforderlich, da viele Kunden und Druckereien ihre eigenen Datentypen verwenden, welche für eine sinnvolle Abarbeitung der Daten vereinheitlicht werden müssen. Eine Möglichkeit der Standardisierung geschieht dadurch, dass den Kunden und den Druckereien bei der Eingabe der Daten am Rechner über bestimmte Bildschirmmasken die Daten in einem bestimmten Format abgefordert werden. Dadurch ist sichergestellt, dass Kunden und Druckereien die zu verarbeitenden Daten in einem Format einlesen, welches in dem erfindungsgemäßen Verfahren korrekt und reproduzierbar verarbeitet werden können.

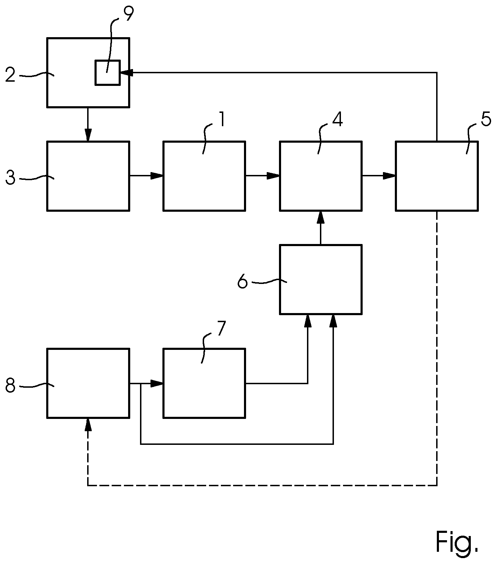

Die vorliegende Erfindung wird nachfolgend anhand einer Figur näher beschrieben und erläutert. Die Figur zeigt:
- Fig.: ein System bestehend aus wenigstens einer Druckerei und einem Kundenrechner sowie einem Rechner zur Durchführung des erfindungsgemäßen Verfahrens.

In der Figur ist ein vereinfachtes System dargestellt, mit dem das erfindungsgemäße Verfahren abgearbeitet werden kann. Zur Vereinfachung ist nur eine Druckerei 2, eine Druckmaschine 9 und ein Kunde 8 dargestellt. Es versteht sich aber, dass grundsätzlich beliebig viele Druckmaschinen 9 in beliebig vielen Druckereien 2 und beliebig viele Kunden 8 in das System eingebunden sein können. In der Figur ist in der Druckerei 2 eine Druckmaschine 9 vorhanden, welche bestimmte technische Eigenschaften aufweist. Die technischen Eigenschaften der Druckerei kann der Druckereibetreiber über eine Eingabeeinrichtung 3 in der Druckerei 2 eingeben. Weiterhin kann der Druckereibetreiber die Eigenschaften seiner verwendeten Verbrauchsmaterialien wie Papier oder Farbe eingeben. Auch seine Kostenstruktur kann der Betreiber der Druckerei 2 über die Eingabeeinrichtung 3 eingeben. Bei der Eingabeeinrichtung 3 handelt es sich bevorzugt um einen Rechner, welcher mit dem Internet verbunden ist. Des Weiteren gibt es in der Figur einen Simulationsrechner 1, welcher mit der Eingabeeinrichtung 3 der Druckerei 2 ebenfalls bevorzugt über eine Internetverbindung kommuniziert. Auf diese Art und Weise können die Daten der Druckerei 2 zum Simulationsrechner 1 transportiert werden.

Weiterhin können potentielle Kunden 8 der Druckerei 2 Kundenpräferenzen 7 und Druckaufträge über eine ähnliche Eingabeeinrichtung eingeben. Bevorzugt geschieht auch dies über einen Rechner, welcher mit dem Internet verbunden ist. Die eingegebenen Kundenpräferenzen 7 können weiterhin durch Eingabe von Toleranzen 6 verschärft oder abgeschwächt werden. Diese Eingabe kann über denselben Rechner erfolgen, bei dem der Kunde 8 auch seine Kundenpräferenzen 7 oder Druckaufträge eingibt. Die Kundenpräferenzen und die Toleranzen werden dann zu einem Variantenrechner 4 weitergeleitet, der die Kundenpräferenzen 7 und Toleranzen 6 verarbeitet und mit den Ergebnissen der Simulation des Simulationsrechners 1 zusammenbringt.

Der Simulationsrechner 1 erstellt auf Basis der Druckerei 2 alle technisch und wirtschaftlich möglichen Druckaufträge. Diese müssen nun mittels des Variantenrechners 4 mit den Druckaufträgen eines Kunden 8 zusammengebracht werden. Denn am Ende geht es immer darum, die gewünschten Druckaufträge des Kunden 8 abzuarbeiten, denn kein Kunde 8 will sich wirklich nach den technischen und wirtschaftlichen Möglichkeiten einer Druckerei 2 richten. Unter Anwendung der angegebenen Toleranzen 6 und Kundenpräferenzen 7 sowie des vom Kunden 8 vorgegebenen Druckauftrags werden dann entsprechende Varianten durch den Variantenrechner 4 erstellt und mit den Simulationsergebnissen des Simulationsrechners 1 verglichen. Bei entsprechenden Übereinstimmungen können dann über ein Ausgabemodul 5 entsprechende Angebote zurück an den Kunden 8 übermittelt werden. Auch das Ausgabemodul 5 und der Variantenrechner 4 sind mit dem Internet verbunden, wo der Bedarf zwischen allen beteiligten Rechnern problemlos ausgetauscht werden kann. Das Angebot kann dann an den Kunden 8 zurückgemeldet werden, welcher an seinem Rechner den Auftrag final bestätigt. Nach der Bestätigung durch den Kunden 8 wird dann der Auftrag vom Ausgabemodul 5 direkt zur Druckerei 2 weitergeleitet und wird dort auf der Druckmaschine 9 abgearbeitet. Auf diese Art und Weise ist es möglich, die Wünsche eines Kunden 8 mit den Möglichkeiten einer Druckerei 2 technisch und wirtschaftlich sinnvoll und vollautomatisch zusammen zu bringen, um so ein effizientes Abarbeiten von Druckaufträgen zu ermöglichen. Der Simulationsrechner 1, der Variantenrechner 4 , die Eingabeeinrichtungen 3,7 und das Ausgabemodul 5 können dabei bevorzugt Teil einer Internetplattform sein, welche Druckaufträge zwischen Kunden 8 und Druckereien 2 routet und die Beteiligten automatisch zueinander bringt, eine solche Plattformlösung ist dabei bevorzugt als Browserapplikation ausgebildet, welche auf jedem internetfähigen Rechner läuft. Selbstverständlich müssen der Simulationsrechner 1, der Variantenrechner 4 und das Ausgabemodul 5 nicht als physikalische Rechner vorhanden sein, es kann sich auch um eine entsprechende Software auf vorhandener Rechenkapazität wie z.B. einer Cloud-Lösung im Internet handeln.

### Bezugszeichenliste

- 1: Simulationsrechner
- 2: Druckerei
- 3: Eingaben der Druckerei
- 4: Variantenrechner
- 5: Ausgabe Angebote
- 6: Eingabe Toleranzen
- 7: Kundenpräferenzen
- 8: Kunde
- 9: Druckmaschine

## Patentansprüche

1. Verfahren zur Erzeugung von Druckerzeugnissen mit wenigstens einem Rechner (1, 4) , wenigstens einer Eingabevorrichtung (3, 6, 7) zur Steuerung wenigstens einer Bedruckstoffe verarbeitenden Maschine (9), wobei der wenigstens einen Eingabevorrichtung (3, 6, 7) die technischen und wirtschaftlichen Daten wenigstens einer Druckerei (2) zugeführt werden, wobei dem wenigstens einen Rechner (1, 4) mittels der wenigstens einen Eingabevorrichtung (3, 6, 7) Präferenzen von Kunden (8) bezüglich Druckaufträgen zugeführt werden,
**dadurch gekennzeichnet,**
**dass** der wenigstens eine Rechner (1) auf Basis der technischen und wirtschaftlichen Daten der wenigstens einen Druckerei (2) in einer Simulation mögliche Druckaufträge berechnet, welche in der wenigstens einen Druckerei (2) produzierbar sind, dass der wenigstens eine Rechner (4) unter Berücksichtigung der Ergebnisse der Simulation und der eingegebenen Präferenzen von Kunden (8) die dazu passenden Angebote für Druckaufträge erstellt, dass der wenigstens eine Rechner (1,4) die erstellten Angebote mit Druckaufträgen von Kunden (8) vergleicht und dass bei Übereinstimmung zwischen Angebot und Druckauftrag des Kunden (8) der Druckauftrag durch wenigstens eine Bedruckstoffe verarbeitenden Maschine (8) abgearbeitet wird.

2. Verfahren nach Anspruch 1,
wobei
der Kunde (8) mittels einer Eingabevorrichtung (7) Toleranzgrenzen vorgibt, welche auf die Kundenpräferenzen und die simulierten Ergebnisse des Rechners (1,4) angewendet werden und bei der Erstellung der Angebote durch den Rechner (1,4) berücksichtigt werden.

3. Verfahren nach Anspruch 1 oder 2,
wobei
als technische oder wirtschaftliche Daten der Druckerei (2) Eigenschaften wie Bedruckstoff, Farbe, in der Druckerei bearbeitbare Prozesse und Kosten eingeben werden.

4. Verfahren nach Anspruch 3,
wobei
durch die Druckerei (2) Produktbeschreibungen für bestimme Druckprodukte eingegeben werden, welche Eigenschaften wie Bedruckstoffformat, Farbigkeit, Produkteigenschaften und den zu druckenden Bildinhalt umfassen.

5. Verfahren nach einem der vorhergehenden Ansprüche,
wobei
die vom Kunden (8) eingebbaren Kundenpräferenzen die gewünschte Druckqualität umfassen.

6. Verfahren nach Anspruch 5,
wobei
die gewünschte Druckqualität durch wenigstens eine der Vorgaben wie visueller Vergleich, Medientyp, Druckmusterkatalog, Druckstandard, Qualitätsskala oder Kundenbewertungen definiert wird.

7. Verfahren nach Anspruch 6,
wobei
die Qualitätsskala in mehrere Qualitätsstufen, insbesondere 1 bis 5, eingeteilt ist.

8. Verfahren nach Anspruch 6,
wobei
die Kundenbewertung aus einer mehrstufigen Zufriedenheitsskala, insbesondere mit 5 Stufen, besteht.

9. Verfahren nach einem der vorhergehenden Ansprüche,
wobei
die Präferenzen der Kunden (8) Eigenschaften der Druckerei (2) wie Terminqualität, Kostenqualität und Bindequalität eines Druckprodukts umfassen.

10. Verfahren nach einem der vorhergehenden Ansprüche,
wobei
die Eingabeeinrichtungen (3, 6,7) mit dem wenigstens einen Rechner (1,4) und der wenigstens einen Bedruckstoffe verarbeitenden Maschine (9) über vorgegebene standardisierte Softwareschnittstellen verbunden sind.

## Claims

1. Method of producing printed products using at least one computer (1, 4), at least one input device (3, 6, 7) for controlling at least one machine (9) processing printing substrates, the at least one input device (3, 6, 7) receiving the technical and economic data of at least one print shop (2) and the at least one computer (1, 4) receiving customer (8) preferences in terms of print jobs by means of the at least one input device (3, 6, 7),
**characterized**
**in that** on the basis of the technical and economic data of the at least one print shop (2), the at least one computer (1) calculates a simulation of possible print jobs producible in the at least one print shop (2), in that, factoring in the results of the simulation and the inputs of customer (8) preferences, the at least one computer (4) generates matching quotes for print jobs, in that the at least one computer (1, 4) compares the generated quotes with customer (8) print jobs, and in that, when a match is found between a quote and the print job of the customer (8), the print job is processed by at least one machine (9) for processing printing substrates.

2. Method according to claim 1,
wherein the customer (8) uses an input device (7) to define tolerances to be applied to the customer preferences and to the simulated results of the computer (1, 4) and to be factored in when the computer (1, 4) generates the quotes.

3. Method according to claim 1 or 2,
wherein the technical or economic print shop (2) data that are input include characteristics such as printing material, ink, processes feasible in the print shop, and costs.

4. Method according to claim 3,
wherein the print shop (2) inputs product descriptions of specific printed products, said product descriptions comprising characteristics such as printing material format, product characteristics, and image content to be printed.

5. Method according to any one of the preceding claims,
wherein the customer (8) preferences a customer may input comprise the desired print quality.

6. Method according to claim 5,
wherein the desired print quality is defined by at least one of parameters such as visual comparison, media type, print sample catalog, printing standard, quality scale, or customer reviews.

7. Method according to claim 6,
wherein the quality scale is divided into multiple quality levels, in particular levels 1 to 5.

8. Method according to claim 6,
wherein customer reviews consist of a multi-level satisfaction scale, in particular a 5-level satisfaction scale.

9. Method according to any one of the preceding claims,
wherein the preferences of the customers (8) comprise characteristics of the print shop (2) such as timeliness, quality of costs, and quality of the bind of a printed product.

10. Method according to any one of the preceding claims,
wherein the input devices (3, 6, 7) are connected to the at least one computer (1, 4) and to the at least one machine (9) for processing printing substrates by defined standardized software interfaces.

## Revendications

1. Procédé de production de produits imprimés avec un ordinateur (1, 4) au moins, un dispositif d'entrée (3, 6, 7) au moins pour la commande d'une machine (9) au moins traitant des supports d'impression, pour lequel les données techniques et économiques d'une imprimerie (2) au moins sont transmises à un dispositif d'entrée (3, 6, 7) au moins, pour lequel des préférences de clients (8) concernant des travaux d'impression sont transmises à un ordinateur (1, 4) au moins au moyen d'un dispositif d'entrée (3, 6, 7) au moins,
**caractérisé en ce**
**que** l'ordinateur (1) au moins calcule, sur la base des données techniques et économiques d'une imprimerie (2) au moins, dans une simulation, des travaux d'impression possibles qui peuvent être produits dans une imprimerie (2) au moins, **en ce qu'**un ordinateur (4) au moins établit, en tenant compte des résultats de la simulation et des préférences saisies de clients (8), les offres correspondantes pour des travaux d'impression, **en ce que** l'ordinateur (1, 4) au moins compare les offres établies avec des travaux d'impression de clients (8) et **en ce que**, en cas de concordance entre l'offre et le travail d'impression du client (8), le travail d'impression est exécuté par une machine (8) au moins traitant des supports d'impression.

2. Procédé selon la revendication 1,
pour lequel le client (8) prédéfinit des limites de tolérance au moyen d'un dispositif d'entrée (7), lesquelles sont appliquées aux préférences du client et aux résultats simulés du calculateur (1, 4) et sont prises en compte lors de l'établissement des offres par le calculateur (1, 4).

3. Procédé selon la revendication 1 ou 2,
pour lequel les données techniques ou économiques de l'imprimerie (2) et des caractéristiques telles que le support d'impression, l'encre, les processus pouvant être traités dans l'imprimerie et les coûts sont saisies.

4. Procédé selon la revendication 3,
pour lequel l'imprimerie (2) saisit des descriptions de produits pour des produits imprimés déterminés, qui comprennent des propriétés telles que le format du support d'impression, l'encrage, les propriétés du produit et le contenu d'image à imprimer.

5. Procédé selon l'une des revendications précédentes,
pour lequel les préférences du client pouvant être saisies par le client (8) incluent la qualité d'impression souhaitée.

6. Procédé selon la revendication 5,
pour lequel la qualité d'impression souhaitée est définie par au moins l'une des spécifications telles que comparaison visuelle, type de support, catalogue d'échantillons d'impression, norme d'impression, échelle de qualité ou évaluations de clients.

7. Procédé selon la revendication 6,
pour lequel l'échelle de qualité est divisée en plusieurs niveaux de qualité, notamment de 1 à 5.

8. Procédé selon la revendication 6,
pour lequel l'évaluation du client consiste en une échelle de satisfaction à plusieurs niveaux, notamment à 5 niveaux.

9. Procédé selon l'une des revendications précédentes,
pour lequel les préférences des clients (8) incluent des caractéristiques de l'imprimerie (2) telles que qualité de délai, qualité de coûts et qualité de reliure d'un produit imprimé.

10. Procédé selon l'une des revendications précédentes,
pour lequel les dispositifs d'entrée (3, 6, 7) sont reliés à l'ordinateur (1, 4) au moins et à une machine (9) au moins traitant des supports d'impression via des interfaces logicielles standardisées prédéfinies.
